**Europäisches Patentamt**

**European Patent Office**

**Office européen des brevets**

(19)

**005**

(12)    **EUROPÄISCHE P/**

(45) Veröffentlichungstag der Patentschrift: **29.08.90**

(21) Anmeldenummer: **85112288.7**

(22) Anmeldetag: **27.09.85**

---

(54) **Verfahren zur Gewinnung und Verwertung von hon**

---

(30) Priorität: **24.10.84 DE 3438857**

(43) Veröffentlichungstag der Anmeldung:
**04.06.86 Patentblatt 86/23**

(45) Bekanntmachung des Hinweises auf die
Patenterteilung:
**29.08.90 Patentblatt 90/35**

(84) Benannte Vertragsstaaten:
**AT BE CH DE FR GB IT LI LU NL SE**

(56) Entgegenhaltungen:
**DE-A-2 721 349**
**DE-A-2 937 390**

**Die Akte enthält technische Angaben, die nach
dem Eingang der Anmeldung eingereicht
wurden und die nicht in dieser Patentschrift
enthalten sind.**

islerpäischen
ppäische
ngelegt,

Courier Press, Leamir

# Beschreibung

Die Erfindung betrifft den im Oberbegriff des Patentanspruches 1 angegebenen Gegenstand.

Bekanntlich beträgt der Abwasseranfall in Europa pro Tag ca. 200 bis 300 l/Einwohner, und er kann sogar auf wesentlich höhere Werte steigen, so daß der Klärschlammbeseitigung aus den Kläranlagen, insbesondere der größerer Städte, eine besondere Bedeutung zukommt. Neben den kommunalen Abwässern fallen aber auch noch in erheblichem Umfange industrielle und gewerbliche biologische Abwässer an, und für die aus all diesen Quellen stammenden gemischten Abwässer haben in der vergangenen Zeit die biologischen Reinigungsverfahren an Bedeutung gewonnen. Die endgültige Beseitigung der Schlämme erfolgt in kleinerem Umfange über die Kompostierung, während der gröbere Teil entweder auf Deponien gebracht oder aber verbrannt werden muß mit weiteren Asche-Deponie-Problemen. Bei der Verbrennung sind ebenso wie bei der Lagerung der Schlämme in Deponien erneute Umweltbelastungen unvermeidlich, wobei der Ablagerung auf Deponien außerdem räumlich gewisse Grenzen gesetzt sind.

Aus dem Stande der Technik, beispielsweise aus DE—AS 27 21 349, DE—PS 29 37 390 und dem Aufsatz von Th. Britsch und G. Spennes in UMWELT 3/78, S. 159—161, ist es bereits bekannt, aus dem aus einer biologischen Kläranlage vor und/oder nach dem Faulturm abgezogenen und mit Kohlenstoffquellen vermischten, biologisch aktiven Schlamm in Bioreaktoren unter Belüftung und Lagerung durch Rotte und Nachrotte einen homogenisierten Humus zu gewinnen, der zu seiner Verwertung einer zu kultivierenden Fläche zugeführt werden kann.

Der vorliegenden Erfindung lag demgegenüber die Aufga be zugrunde, ein Verfahren verfügbar zu machen, mit dem nicht nur der Transport des Schlammes und gegebenenfalls des hieraus gewonnenen homogenisierten Humus zu einer zu kultivierenden Fläche vereinfacht wird, sondern auch das Ablaufwasser der biologischen Kläranlage einer sinnvollen und nutzbringenden Verwertung bei der Rekultivierung und Neugewinnung von Vegetationsflächen zugeführt wird.

Die Lösung dieser Aufgabe ist das im Kennzeichen des Patentanspruches 1 und in den Unteransprüchen näher erläuterte Verfahren.

Als Schlamm kommt nur der Schlamm in Frage, der aus gut funktionierenden biologischen Kläranlagen abgezogen wird. Dies kann sowohl pumpfähiger als auch nicht-pumpfähiger Schlamm sein. Pumpfähiger Schlamm, der vor dem Faulturm entnommen wird, ist belebter Schlamm, der allerdings eine getrennte Lagerung und auch eine besondere Behandlung während des Transportes erfordert und aus dem zusätzlich Faulgas gewonnen werden kann. Nach dem Faulturm der Kläranlage entnommener pumpfähiger Schlamm erfordert ebenfalls eine getrennte Lagerung und muß während der Lagerung und auch während des Transportes mittels Druckluft behandelt werden. Als nicht-pumpfähiger Schlamm kann der drucklos teilentwässerte Schlamm verwendet werden, der einen noch belebten Schlamm darstellt und einer speziellen Lagerung bedarf, indem er nicht zu hoch gestapelt wird, wobei dem speziellen Verwendungszweck angepaßte Transportcontainer eingesetzt werden können. Der Wasseranteil dieses teilentwässerten Schlammes beträgt ca. 70 bis 80%. Schließlich kann aber auch der aus Kammerfilterpressen stammende Schlamm mitverwendet werden, der noch einen Wassergehalt von ca. 55% hat, stichfest ist und ebenso wie andere Schüttgüter gelagert und transportiert werden kann. Mit besonderem Vorteil werden Gemische aus den unterschliedlichen Schlämmen verwendet, beispielsweise Gemische aus dem zuletzt erwähnten stichfesten Schlamm, der dem Schlamm vor dem Bioreaktor zugemischt wird.

Die Rotte und Nachrotte des Schlammes erfolgt auf dem Tanker und gegebenenfalls am Bestimmungsort und kann sowohl kontinuierlich als auch chargenweise erfolgen. Die notwendige Zufuhr von Sauerstoff oder sauerstoffhaltigen Gasen kann entweder durch einfache Belüftung erfolgen, es ist aber auch möglich, diese Gase über Leitungen einzubringen bzw. sie unter Druck dem Bioreaktor zuzuführen. Selbstverständlich ist es möglich, den Schlamm auch über mehrere Bioreaktoren zu führen, wobei es in jedem Falle besonders zweckmäßig ist, für eine ständige Bewegung des Schlammes innerhalb der Reaktoren zu sorgen.

Um unerwünschte organische Bestandteile des Schlammes zusätalich abzubauen, kann dieser zusätalich bestrahlt werden. Auch ist es erforderlich, Kohlenstoffquellen beizumischen, die eine raschere Umsetzung des Schlammes unter der Einwirkung der vorhandenen Mikroorganismen gewährleisten. Diese Kohlenstoffquellen können in Mengen bis zu 15 Gew.-%, vorzugsweise in Mengen von 8 bis 12 Gew.-% mit dem Schlamm vermischt werden.

Die für die Lagerung und Umsetzung des Schlammes erforderlichen Vorrichtungen halten sich in maßvollen Grenzen und verursachen keinen übertriebenen Installationsaufwand. So ist es völlig ausreichend, wenn jeder Tank bzw. Container ein Durchmischungsaggregat aufweist und mit einer Luftzuleitung verbunden ist, durch die über ein zentrales Gebläse Sauerstoff oder sauerstoffhaltige Gase in die Schlammbehälter eingeführt werden können. Über eine zentrale Umpumpanlage mit Ventilsteuerungen zu den Tanks und mit Luftzufuhr in dem jeweiligen Rücklauf und die Tankeinführung kann das Umpumpen der Schlammbehälter und die Fördrung der Schlämme zum Bestimmungsort ohne Schwierigkeiten durchgeführt werden. Darüberhinaus können sowohl in den Behältern als auch in den jeweiligen Rohrleitungen UV-Strahler vorgesehen werden, die über Zeitschalter reguliert werden, so daß zeitlich begrenzte Bestrahlungen möglich sind.

Um die zu kultivierende Fläche für den homogenisierten Humus aufnahmefähig und auswertbar zu gestalten, kann sich eine Bodenentsalzung empfehlen. Für diese Bodenentsalzung durch Drainage kann neben dem Ablaufwasser der biologischen Kläranlage auch das bei der Teilentwässerung des Belebtschlammes gewonnene Wasser als solches oder aber im Gemisch mit dem Ablaufwasser zur Anwendung kommen. Gleichzeitig mit der Bodenentsalzung wird aber auch einer Bewässerung der zu kultivierenden Fläche erreicht bzw. kann durch die bei dem erfindungsgemäßen Verfahren stets wieder anfallenden Wässer bewirkt werden.

Die Anwendung des Verfahrens gemäß der Erfindung ist selbstverständlich nicht nur im regionalen Bereich, sondern insbesondere auch im Wüstenregionen möglich. Die erfindungsgemäß erzielbaren Vorteile sind auch für den Nichtfachmann ohne weiteres erkennbar. So wird der in großen Mengen anfallende Schlamm der kommunalen und industriellen Abwasserbeseitigung einer sinnvollen Verwertung zugeführt, indem bisher nicht genutzte Bodenflächen kultiviert und für eine landwirtschaftliche Nutzung erschlossen werden. Nicht übersehen werden darf aber auch, daß mit dem Verfahren gemäß der Erfindung zusätliche Arbeitsplätze geschaffen werden, die die Wirtschaft insgesamt beleben und auch weiteren Generationen nützlich sein werden.

## Patentansprüche

1. Verfahren zur Gewinnung und Verwertung von homogenisiertem Humus, wobei der Humus durch Rotte von, aus einer biologischen Kläranlage vor und/oder nach dem Faulturm abgezogenem und mit Kohlenstoffquellen vermischtem, biologisch aktivem Schlamm in mindestens einem Bioreaktor unter Belüftung sowie durch anschließende Lagerung zwecks Nachrotte gewonnen wird, und wobei der so gewonnene Humus zu seiner Verwertung einer zu kultivierenden Fläche zugeführt wird, dadurch gekennzeichnet, daß der Schlamm als Fracht für einen Tanker verwendet und mit den Kohlenstoffquellen vermischt auf dem Tanker und gegebenenfalls am Bestimmungsort der Rotte sowie der Nachrotte unterzogen wird, und daß die zu kultivierender Fläche nach der Humuszuführung mit dem ebenfalls als Fracht auf dem Tanker mitgeführten Ablaufwasser der biologischen Kläranlage bewässert wird.

2. Verfahren nach Anspruch 1, dadurch gekennzeichnet, daß als Tanker von Ölresten durch Spülen weitestgehend befreite Erdöltanker und/oder Flüssiggastanker bzw. Flüssiggaskatamarane eingesetzt werden.

3. Verfahren nach Anspruch 1 und 2, dadurch gekennzeichnet, daß die Kohlenstoffquellen in Mengen bis zu 15 Gew.-%, vorzugsweise in Mengen von 8 bis 12 Gew.-% mit dem Schlamm vermischt werden.

4. Verfahren nach Anspruch 1 bis 3, dadurch gekennzeichnet, daß als Bioreaktoren vertikale und/oder horizontale Reaktoren eingesetzt werden.

ɔdurch
aktive
ʌlamm
ɔinern
ɔrt und

ion de
ʌs est
ɔur au
gique-
ʌtation
tréfac-
ɔne, et
issage
ɔ étant
face à
ʌtilisée
ʌec les
ɔr et, le
ɔurris-
rface à
rrosée
décansporté

ctérisé
pétroespecibérés
ɔ.
ʌracté-
ɔ sont
ʌds, de
ɔ, avec

à 3,
ʌtilisés
ʌtales.
à 3,
ɔiques
boue
ɔrtées
ɔirs de

tion of
nus is
ɔr with
ʌaving
ɔ plant
esting
ɔarbon
ɔ pur-
ɔ thus
ted for
ɔludge
d with
g and
ɔ place
ɔvated,

after it has been supplied with the humus, is watered using the discharge water from the biological sewage plant which water has also been carried as freight in the tanker.

2. The method according to claim 1, characterized in that crude oil tankers and/or liquefied gas tankers or liquefied gas catamarans, respectively, which have been mostly rid of oil residues by flushing, are used as the tankers for transportation.

3. The method according to claims 1 and 2, characterized in that the carbon sources are admixed to the sludge in an amount of up to 15% by weight, and preferably of from 8 to 12% by weight, based on the total weight.

4. The method according to claims 1 to 3, characterized in that vertical and/or horizontal reactors are employed as the bio-reactors.

5. The method according to claims 1 to 3, characterized in that the biological active sludge is present in the form of compact activated sludge and is stored and transported in tray containers or rot containers with aeration in the tanker.